(19) Europäisches Patentamt / European Patent Office / Office européen des brevets

(11) **EP 4 373 211 A1**

(12) **EUROPEAN PATENT APPLICATION**
published in accordance with Art. 153(4) EPC

(43) Date of publication:
**22.05.2024  Bulletin 2024/21**

(21) Application number: **21950251.5**

(22) Date of filing: **23.07.2021**

(51) International Patent Classification (IPC):
**H05B 6/12** (2006.01)      **H05B 6/06** (2006.01)
**H02M 7/44** (2006.01)

(52) Cooperative Patent Classification (CPC):
**H02M 7/44; H05B 6/06; H05B 6/12;** Y02B 40/00

(86) International application number:
**PCT/KR2021/009565**

(87) International publication number:
**WO 2023/286904 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **16.07.2021  KR 20210093787**

(71) Applicant: **LG Electronics Inc.
Yeongdeungpo-gu
Seoul 07336 (KR)**

(72) Inventors:
• **LEE, Jaewoo
  Seoul 08592 (KR)**
• **MOON, Hyunwook
  Seoul 08592 (KR)**
• **PARK, Kyungho
  Seoul 08592 (KR)**

(74) Representative: **Vossius & Partner
Patentanwälte Rechtsanwälte mbB
Siebertstrasse 3
81675 München (DE)**

(54) **INDUCTION HEATING TYPE COOKTOP**

(57)    The present disclosure provides an induction heating type cooktop capable of heating both a magnetic body and a non-magnetic body with only a single coil and a capacitor without a separate switching structure. The induction heating type cooktop comprises: an upper plate glass having a heating region formed so as to heat a cooking container; a working coil generating a magnetic field to heat the cooking container; and an inverter having a switch driven to allow current to flow in the working coil, wherein the area of the working coil may be smaller than the area of the heating region.

【Figure 9】

Example of Rectangular Coil — Inner Diameter / Outer Diameter — Maximum Number of Turns — Inner Diameter / Outer Diameter — (Maximum Number of Turns)/2

EP 4 373 211 A1

**Description**

[TECHNICAL FIELD]

The present disclosure relates to an induction heating type cooktop, and more particularly, to an induction heating type cooktop capable of heating both a magnetic container and a non-magnetic cooking container.

[BACKGROUND ART]

Various types of cooking appliances are used to heat food at home or in the restaurant. According to the related art, a gas stove using gas as a fuel has been widely used. However, recently, devices for heating an object to be heated, for example, a cooking container such as a pot, have been spread using electricity instead of the gas.

A method for heating the object to be heated using electricity is largely divided into a resistance heating method and an induction heating method. The electrical resistance method is a method for heating an object to be heated by transferring heat generated when electric current flows through a metal resistance wire or a non-metal heating body such as silicon carbide to the object to be heated (e.g., a cooking container) through radiation or conduction. In the induction heating method, when high-frequency power having a predetermined intensity is applied to a coil, eddy current is generated in the object to be heated using magnetic fields generated around the coil so that the object to be heated is heated.

On the other hand, in the induction heating method, there is a problem that the output power varies depending on a material of a cooking container even if the same current is applied to a coil. Specifically, a non-magnetic container has a low specific resistance in the same operating frequency band due to lower permeability than a magnetic container, and accordingly, the output of the non-magnetic container is smaller than the output of the magnetic container.

Therefore, there is a need for a method for increasing output not only for a magnetic container but also for a non-magnetic container. As a method for increasing the output of a conventional non-magnetic container, a structure for switching the inductance of a working coil or the capacitance of a resonance network has been designed. However, in this case, since additional circuits such as switching switches are added, problems such as increased manufacturing costs and increased volumes occur.

[DISCLOSURE OF INVENTION]

[TECHNICAL PROBLEM]

The present disclosure provides an induction heating type cooktop capable of heating both a magnetic body and a non-magnetic body with only a single coil and a capacitor without a separate switching structure.

The present disclosure provides an induction heating type cooktop in which the resistance to a cooking container is increased by increasing an operating frequency band compared to an existing frequency band, thereby improving heating output for a non-magnetic body as well as a magnetic body without a separate switching structure.

[TECHNICAL SOLUTION]

A induction heating type cooktop according to an embodiment of the present disclosure may include an upper plate glass having a heating region formed so as to heat a cooking container, a working coil configured to generate a magnetic field to heat the cooking container, and an inverter having a switch driven to allow current to flow in the working coil, wherein an area of the working coil may be smaller than an area of the heating region.

The area of the working coil may be half of the area of the heating region.

The working coil may be arranged such that a distance between a first turn and a second turn adjacent to the first turn is spaced apart from each other by a preset interval.

The preset interval may be a thickness of the working coil.

The switch may be a SiC element.

A number of turns of the working coil may be determined by the area of the heating region and specifications of the working coil.

The number of turns of the working coil may be half of a value obtained by dividing a length corresponding to a difference between an inner diameter and an outer diameter of the working coil by a diameter of one turn of the working coil.

The diameter of one turn of the working coil may be determined by a diameter of a single strand of a copper wire constituting the working coil and a total number of strands, the diameter of the single strand may be smaller than a penetration length of an operating frequency, and the total number of strands may be determined according to an expected current value according to a power factor in a resonance circuit.

The inverter may operate in a frequency band of 50 kHz or higher.

[ADVANTAGEOUS EFFECTS]

According to an embodiment of the present disclosure, since an operating frequency is high, there is an advantage in that an output of at least 2 kW or more may be secured not only for a magnetic container but also for a non-magnetic container.

According to an embodiment of the present disclosure, since the area of a working coil is smaller than the heating region, less copper is used. Therefore, there is an advantage of reducing manufacturing costs.

According to an embodiment of the present disclosure, since a switching structure is not required, there is an advantage of minimizing an increase in volume or manufacturing costs.

According to an embodiment of the present disclosure, since a silicon carbide (SiC) element is used as a switching element, there is an advantage of ensuring safety of performance even in a high frequency band.

[BRIEF DESCRIPTION OF DRAWINGS]

FIG. 1 is a perspective view of a cooking appliance according to an embodiment of the present disclosure.

FIG. 2 is a cross-sectional view illustrating the cooktop and the cooking container according to an embodiment of the present disclosure.

FIG. 3 is a circuit diagram of the cooktop according to an embodiment of the present disclosure.

FIG. 4 is a view illustrating output characteristics of the cooktop according to an embodiment of the present disclosure.

FIG. 5 is data showing a result of measuring the outputs for a magnetic body and a non-magnetic body according to the number of turns of a working coil according to an embodiment of the present disclosure.

FIG. 6 is a graph showing a driving frequency in an experiment according to FIG. 5.

FIG. 7 is a view illustrating a heating region of a cooktop according to an embodiment of the present disclosure.

FIG. 8 is a cross-sectional view of a Litz wire of a cooktop according to an embodiment of the present disclosure.

FIG. 9 is an exemplary view illustrating an arrangement of a working coil according to an embodiment of the present disclosure.

FIG. 10 is an exemplary view illustrating an arrangement structure of a ferrite core for a rectangular working coil according to a first embodiment of the present disclosure.

FIG. 11 is an exemplary view illustrating an arrangement structure of a ferrite core for a rectangular working coil according to a second embodiment of the present disclosure.

FIG. 12 is an exemplary view illustrating an arrangement structure of a ferrite core for a rectangular working coil according to a third embodiment of the present disclosure.

FIG. 13 is an exemplary view illustrating an arrangement structure of a ferrite core for a rectangular working coil according to a fourth embodiment of the present disclosure.

FIG. 14 is a view illustrating outputs for a magnetic body and a non-magnetic body in a cooktop according to an embodiment of the present disclosure.

[BEST MODE FOR CARRYING OUT THE INVENTION]

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, an induction heating type cooktop and an operation method thereof according to an embodiment of the present disclosure will be described. For convenience of description, the "induction heating type cooktop" is referred to as a "cooktop".

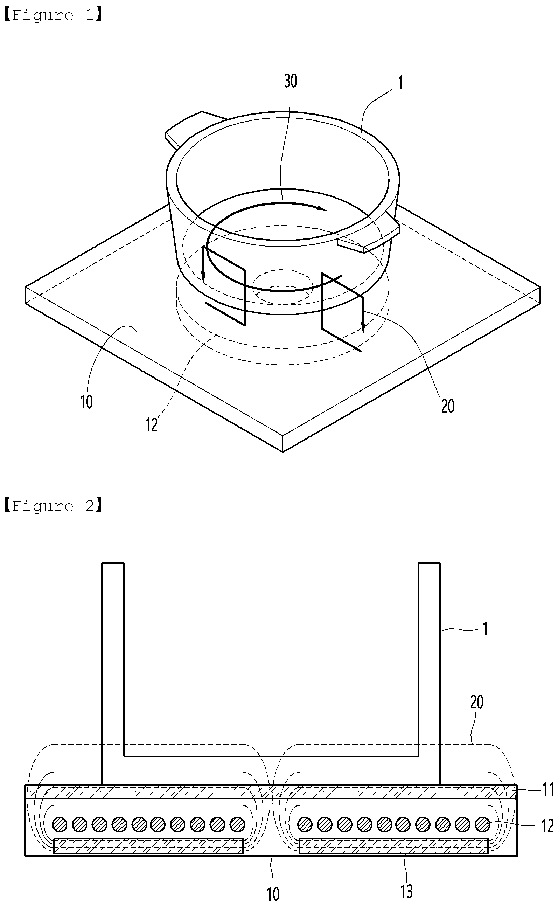

FIG. 1 is a perspective view illustrating a cooktop and a cooking container according to an embodiment of the present disclosure, and FIG. 2 is a cross-sectional view illustrating the cooktop and the cooking container according to an embodiment of the present disclosure.

A cooking container 1 may be disposed above the cooktop 10, and the cooktop 10 may heat a cooking container 1 disposed thereon.

First, a method for heating the cooking container 1 using the cooktop 10 will be described.

As illustrated in FIG. 1, the cooktop 10 may generate a magnetic field 20 so that at least a portion of the magnetic field 20 passes through the cooking container 1. Here, if an electrical resistance component is contained in a material of the cooking container 1, the magnetic field 20 may induce an eddy current 30 in the cooking container 1. Since the eddy current 30 generates heat in the cooking container 1 itself, and the heat is conducted or radiated up to the inside of the cooking container 1, contents of the cooking container 1 may be cooked.

When the material of the cooking container 1 does not contain the electrical resistance component, the eddy current 30 does not occur. Thus, in this case, the cooktop 10 may not heat the cooking container 1.

As a result, the cooking container 1 capable of being heated by the cooktop 10 may be a stainless steel container or a metal container such as an enamel or cast iron container.

Next, a method for generating the magnetic field 20 by the cooktop 10 will be described.

As illustrated in FIG. 2, the cooktop 10 may include at least one of an upper plate glass 11, a working coil 12, or a ferrite core 13.

The upper plate glass 11 may support the cooking container 1. That is, the cooking container 1 may be placed on a top surface of the upper plate glass 11.

In addition, the upper plate glass 11 may be made of ceramic tempered glass obtained by synthesizing various mineral materials. Thus, the upper plate glass 11 may protect the cooktop 10 from an external impact.

In addition, the upper plate glass 11 may prevent foreign substances such as dust from being introduced into the cooktop 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooktop 10.

When the current flows through the working coil 12, the magnetic field 20 may be generated, and the magnetic field 20 may generate the eddy current 30 by meeting the electrical resistance component contained in the cooking container 1. The eddy current may heat the cooking container 1, and thus, the contents of the cooking container 1 may be cooked.

In addition, heating power of the cooktop 10 may be adjusted according to an amount of current flowing through the working coil 12. As a specific example, as the current flowing through the working coil 12 increases, the magnetic field 20 may be generated more, and thus, since the magnetic field passing through the cooking container 1 increases, the heating power of the cooktop 10 may increase.

The ferrite core 13 is a component for protecting an internal circuit of the cooktop 10. Specifically, the ferrite core 13 serves as a shield to block an influence of the magnetic field 20 generated from the working coil 12 or an electromagnetic field generated from the outside on the internal circuit of the cooktop 10.

For this, the ferrite core 13 may be made of a material having very high permeability. The ferrite core 13 serves to induce the magnetic field introduced into the cooktop 10 to flow through the ferrite core 13 without being radiated. The movement of the magnetic field 20 generated in the working coil 12 by the ferrite core 13 may be as illustrated in FIG. 2.

The cooktop 10 may further include components other than the upper glass 11, the working coil 12, and the ferrite core 13 described above. For example, the cooktop 10 may further include an insulator (not shown) disposed between the upper plate glass 11 and the working coil 12. That is, the cooktop according to the present disclosure is not limited to the cooktop 10 illustrated in FIG. 2.

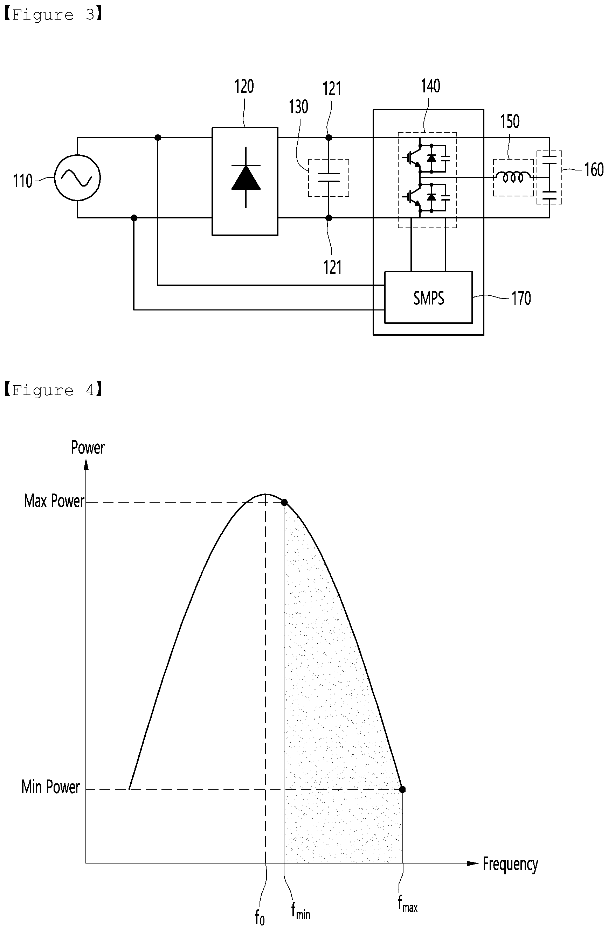

FIG. 3 is a circuit diagram of the cooktop according to an embodiment of the present disclosure.

Since the circuit diagram of the cooktop 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that a high-frequency current flows in the working coil 150. The inverter 140 may include a semiconductor switch, and the semiconductor switch may be an insulated gate bipolar transistor (IGBT) or a silicon carbide (SiC) element, but this is only an example and the present disclosure is not limited thereto. The inverter 140 drives the semiconductor switch to cause a high-frequency current to flow in the working coil 150, thereby forming a high-frequency magnetic field in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooktop 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooktop 10 according to a frequency band.

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooktop 10, the Q factor is determined by the inductance value of the working coil 150 included in the cooktop 10 and the capacitance value of the resonance capacitor 160. The resonance curve may be different depending on the Q factor. Thus, the cooktop 10 has different output characteristics according to the inductance value of the working coil 150 and the capacitance value of the resonance capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooktop 10 uses a frequency in a right region based on the resonance frequency f0 of the resonance curve. In addition, the cooktop 1 may have a minimum operating frequency and a maximum operating frequency, which are set in advance.

For example, the cooktop 10 may operate at a frequency corresponding to a range from the maximum operating frequency fmax to the minimum operating frequency fmin. That is, the operating frequency range of the cooktop 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooktop 10 does not operate at an audible frequency (about 16 Hz to 20 kHz), noise of the cooktop 10 may be reduced.

Since setting values of the above-described maximum operating frequency fmax and minimum operating frequency fmin are only examples, the embodiment of the present disclosure is not limited thereto.

When receiving a heating command, the cooktop 10 may determine an operating frequency according to a heating power level set by the heating command. Specifically, the cooktop 10 may adjust the output power by decreasing in operating frequency as the set heating power level is higher and increasing in operating frequency as the set heating power level is lower. That is, when receiving the heating command, the cooktop 10 may perform a heating mode in which the cooktop operates in one of the operating frequency ranges according to the set heating power.

Accordingly, the set heating power is the same, the cooktop 10 may operate at the same operating frequency. However, when the cooking container 1 placed on the cooktop 10 is of a different material, the resistance of the cooking container 1 varies. Accordingly, even though the set heating power is the same, the output is different, and thus, there is a problem that the heating time and speed of the cooking container 1 vary. In particular, when heating the non-magnetic cooking container 1, there is a limitation in that the cooktop 1 cannot produce high output due to the small resistance of the cooking container 1.

Accordingly, the present disclosure provides a cooktop capable of heating containers made of different materials, that is, a magnetic container and a non-magnetic container, to a minimum preset reference output (for example, 2 kW) or more. In particular, the present disclosure provides a cooktop capable of heating a magnetic body and a non-magnetic body in the same cooking zone while reducing manufacturing costs and reducing volume because the cooktop does not have a separate switching structure.

Specifically, the present disclosure aims to increase an output for a non-magnetic body by increasing an operating frequency.

For example, the cooktop 10 may increase the operating frequency of the inverter 140, compared to the existing operating frequency (about 20-50 kHz). For example, the operating frequency of the inverter 140 may be approximately twice or more than the existing operating frequency. The inverter 140 may operate in a frequency band of 50 kHz or higher.

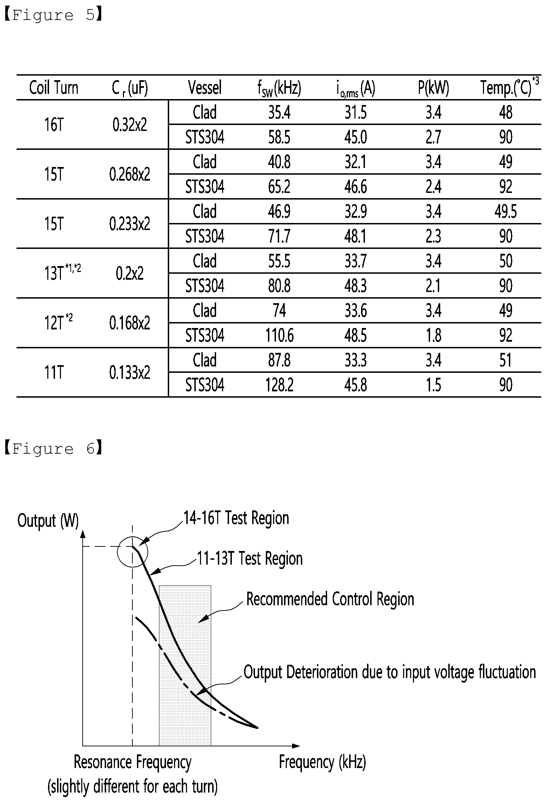

On the other hand, when operating in such a high frequency band, the result of the output experiments for the magnetic body and the non-magnetic body according to the number of turns of the working coil 12 may be the same as illustrated in FIG. 5.

FIG. 5 is data showing the result of measuring the outputs for the magnetic body and the non-magnetic body according to the number of turns of the working coil according to an embodiment of the present disclosure.

The example in FIG. 5 shows the output measured while changing the number of turns and the capacitor of the rectangular working coil 12 when the working coil 12 is $200 \times 170$ mm$^2$.

In FIG. 5, Clad may be STS430 and represent a magnetic container, and STS304 may represent a non-magnetic container.

When the output for the magnetic container is 3.4 kW and the output for the non-magnetic container is 2.2 kW, it can be seen from data of FIG. 5 that the output can be stably secured when the number of turns is 13T to 16T.

On the other hand, FIG. 6 is a graph showing a driving frequency in an experiment according to FIG. 5.

Referring to the graph of FIG. 6, when the working coil is 14T to 16T, the driving frequency is near the resonance frequency, which may cause excessive heat generation in the switch due to errors in control, on/off signal delay of a gate signal, etc. Additionally, when the quality of the AC input power deteriorates, the output may be lower than the rated output, and the heating time may increase.

An operation may be desirable in a recommended control region as illustrated in FIG. 6. It can be seen that as the number of turns decreases, the position where the rated output is produced becomes closer to the recommended control region as the driving frequency increases.

Accordingly, in the cooktop according to an embodiment of the present disclosure, the working coil 12 is designed to reduce turns in order to secure performance for the magnetic container and the non-magnetic container.

That is, the cooktop 10 according to an embodiment of the present disclosure aims to secure operational stability by limiting the number of turns of the working coil. By limiting the number of turns of the working coil, the reactance of the working coil may be maintained despite increasing the operating frequency. That is, considering Equation 1 for calculating reactance, assuming that the operating frequency is increased by two times, the inductance has to be formed by half to maintain the reactance. This can be easily confirmed through Equation 2.

$$[\text{Equation 1}]$$

$$jX_L = 2\pi f \times L$$

$$[\text{Equation 2}]$$

$$jX_L = 2\pi (f \times 2) \times (L/2)$$

Accordingly, the cooktop according to an embodiment of the present disclosure may be provided with only half of the working coils that may be disposed in positions corresponding to the heating region. That is, the number of turns corresponding to half of the maximum number of turns that may be disposed in a position corresponding to the heating region may be disposed on the working coil. In some embodiments, approximately 1 or 2 turns may be added or omitted within the actual increase rate of the operating frequency and designable limits.

On the other hand, the method for calculating the maximum number of turns may be as follows.

First, the area of the heating region may be obtained.

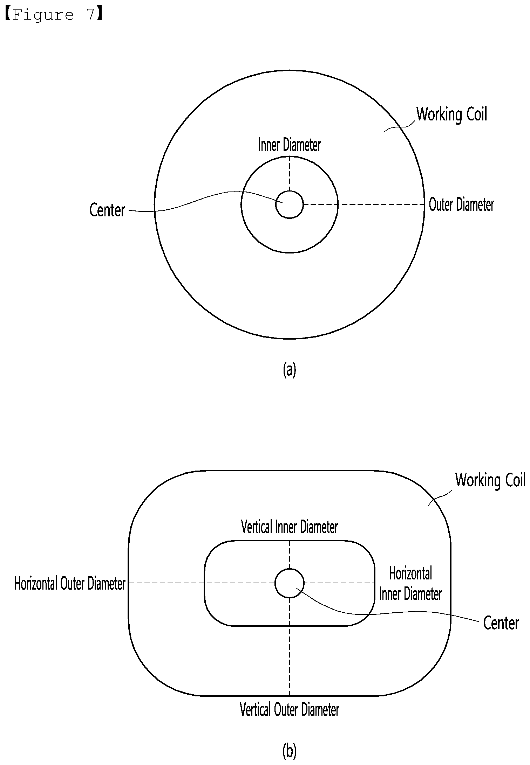

FIG. 7 is a view illustrating the heating region of the cooktop according to an embodiment of the present disclosure.

The working coil 12 may be arranged in a circular or rectangular shape. That is, the working coil 12 may be wound along a circle as illustrated in FIG. 7(a) or along a rectangle as illustrated in FIG. 7(b). At this time, a predetermined region including the center may be a region where a temperature sensor is disposed. Therefore, the inner diameter (including the horizontal inner diameter and the vertical inner diameter) may be required to be at a minimum distance such that the magnetic field generated from the working coil 12 does not affect the temperature sensor.

The working coil 12 is disposed between the inner diameter and the outer diameter and may be wound from the center to the outside or from the outside to the center.

The region where the working coil 12 is disposed may be a heating region. In more detail, the region of the upper plate glass 11 that overlaps the working coil 12 in the vertical direction may be the heating region. That is, the heating region in which the cooking container 1 is heated is formed in the upper plate glass 11, and the heating region may be a region that overlaps the working coil 12 in the vertical direction.

Therefore, the heating region may be determined by the region where the working coil 12 is disposed, that is, the inner diameter (including the horizontal inner diameter and the vertical inner diameter) and the outer diameter (including the horizontal outer diameter and the vertical outer diameter).

Once the heating region is obtained, the specifications of a Litz wire may be obtained.

The working coil 12 may be a Litz wire.

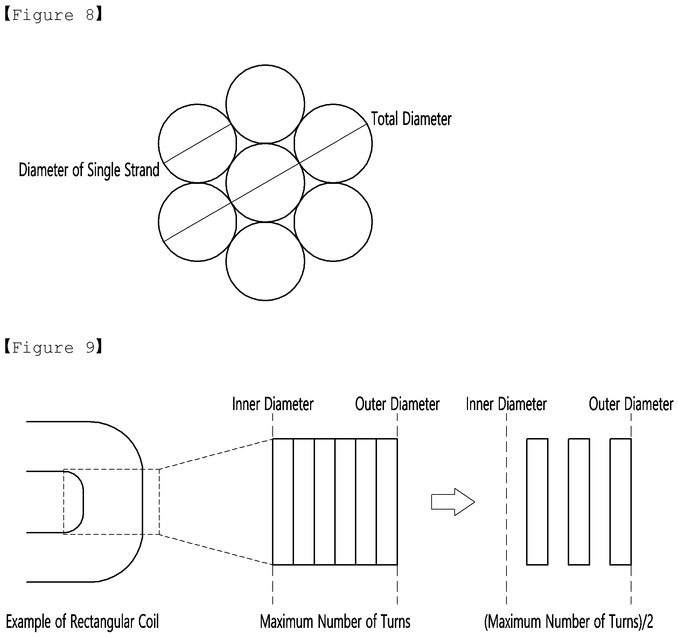

FIG. 8 is a cross-sectional view of the Litz wire of the cooktop according to an embodiment of the present disclosure.

As illustrated in FIG. 8, the working coil 12 may be a Litz wire made of multiple strands of copper. The diameter of a single strand of the Litz wire may be smaller than the penetration length of the operating frequency of the cooktop 10. At this time, the penetration length may be calculated through Equation 3 below.

[Equation 3]

$$\delta = 1 / (\pi f \mu \sigma)$$

In Equation 3, f may be the operating frequency, $\mu$ may be the permeability of copper, and $\sigma$ may be the conductivity of copper.

The total number of strands of the Litz wire may be determined according to the expected current value in the design considering the power factor in the resonance circuit, and the expected current value may be calculated as the target output divided by the product of the inverter input voltage and the resonance circuit power factor. The target output may be calculated as the product of 230V (voltage) and the total current. That is, the target output may be calculated as the product of the inverter input voltage, the inverter resonance current, and the resonance circuit power factor.

In summary, it may be the same as Equation 4 and Equation 5.

target output = 230V (voltage) $\times$ total current = inverter input voltage (fundamental wave) $\times$ inverter resonance current (fundamental wave) $\times$ (resonance circuit power factor)  [Equation 4]

expected current (fundamental wave) = target output / (inverter input voltage (fundamental wave) $\times$ (resonance circuit power factor))  [Equation 5]

However, the power factor of the resonance circuit may be based on the design value.

Once the area of the heating region and the specifications of the Litz wire are obtained by the above-described method, the maximum number of turns of the working coil that may be disposed within the area of the heating region may be calculated according to the obtained specifications of the Litz wire.

In other words, if the diameter of a single strand of the Litz wire and the total number of strands are calculated, the total diameter of the Litz wire, that is, the diameter of one turn of the working coil, may be calculated. A value obtained by dividing the length corresponding to the difference between the inner diameter and the outer diameter by the diameter of one turn of the working coil may be determined as the maximum number of turns of the working coil.

In the above-described manner, once the maximum number of turns of the working coil is determined, the working coil may be arranged to be wound by the number of turns corresponding to half the maximum number of turns.

In summary, the number of turns of the working coil may be half of the value obtained by dividing the length corresponding to the difference between the inner diameter and the outer diameter of the working coil by the diameter of one turn of the working coil. The diameter of one turn of the working coil may be determined by the diameter of a single strand of the copper wire constituting the working coil and the total number of strands, the diameter of the single strand may be smaller than the penetration length of the operating frequency, and the total number of strands may be determined according to the expected current value according to the power factor in the resonance circuit.

Accordingly, the area of the working coil 12 may be smaller than the area of the heating region. At this time, the area of the working coil 12 may refer to the area of copper actually used in the working coil 12. In other words, the area of the working coil 12 may not be the area occupied by the working coil 12, but the area when the working coils 12 are actually unfolded.

Accordingly, the area of the working coil 12 may be half of the area of the heating region.

In some embodiments, the cooktop 10 may not only be formed with the number of turns corresponding to the above-described (maximum number of turns/2), but may also be formed with (maximum number of turns/2) $\pm$ (1-2 turns). The added or reduced 1-2 turns may be determined within the frequency increase rate and design limits. That is, the number of turns of the working coil 12 may be determined by the area of the heating region and the specifications of the working coil 12.

In the cooktop 10 according to an embodiment of the present disclosure, the switching element of the inverter 140 may be a SiC element. Accordingly, the heat generation problem caused by fast switching may be tolerated by increasing the operating frequency.

In the present specification, it is assumed that the working coil of the cooktop 10 is formed with the number of turns corresponding to half the maximum number of turns selected according to the above-described method.

FIG. 9 is an exemplary view illustrating the arrangement of the working coil according to an embodiment of the present disclosure.

As illustrated in FIG. 9, the working coil 12 may be formed with the number of turns corresponding to half the maximum number of turns. At this time, each turn of the working coil 12 may be arranged to be spaced apart from the adjacent turn by a preset distance. That is, the working coil 12 may be arranged so that the distance between the first turn and the second turn adjacent to the first turn is spaced apart by a preset interval.

The preset interval may be the thickness of the working coil 12. That is, the preset interval may be the thickness of one turn of the working coil. However, since this is only an example, it is reasonable that the present disclosure is not limited thereto.

A ferrite core 13 or an aluminum shield (not shown) may be installed to increase the efficiency of the working coil 12 formed and arranged in this way and to minimize magnetic flux leakage.

The aluminum shield (not shown) may be installed with sufficient thickness to prevent a PCB from being affected by the electromagnetic field caused by the working coil 12.

On the other hand, when the working coil 12 is arranged circularly, the working coil 12 may be arranged radially. When the working coil 12 is arranged in a rectangular shape, the working coil 12 may be arranged according to an embodiment described later.

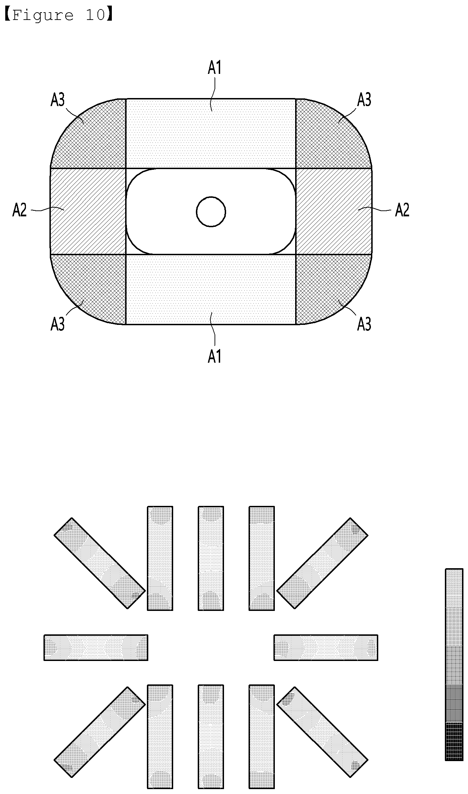

In FIGS. 10 to 13 described later, in the rectangular working coils 12, a portion in which a side is long is referred to as a first region A1, a portion in which a side is short is referred to as a second region A2, and a portion between the first region and the second region A2 is referred to as a third region A3. In FIGS. 10 to 13, the upper drawings illustrate the regions A1, A2, and A3 of the rectangular working coil 12, the lower drawings illustrate the arrangement of the ferrite core, and the boldness may indicate the strength of the magnetic flux density.

FIG. 10 is an exemplary view illustrating an arrangement structure of a ferrite core for a rectangular working coil according to a first embodiment of the present disclosure.

As illustrated in FIG. 10, according to the first embodiment, ferrite cores having the same size and the same thickness may be disposed in the first to third regions A1, A2, and A3. For example, the ferrite cores may each have a width of 15 mm, a height of 60 mm, and a thickness of 5T, but this is only an example and the present disclosure is not limited thereto.

On the other hand, the number of ferrite cores disposed in the first region A1 may be greater than the number of ferrite cores disposed in the second region A2. The number of ferrite cores disposed in the first region A1 may be greater than the number of ferrite cores disposed in the third region A3. The number of ferrite cores disposed in the second region A2 may be equal to the number of ferrite cores disposed in the third region A3.

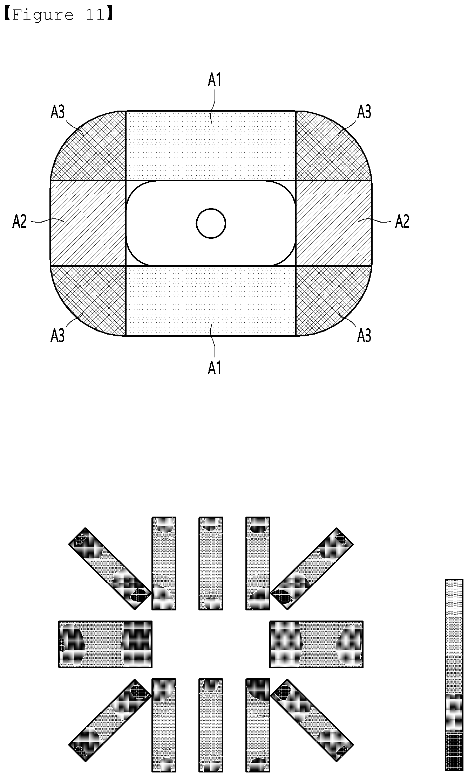

FIG. 11 is an exemplary view illustrating an arrangement structure of a ferrite core for a rectangular working coil according to a second embodiment of the present disclosure.

As illustrated in FIG. 11, according to the second embodiment, the size of the ferrite core disposed in the second region A2 may be greater than the size of the ferrite core disposed in the first region A1. In addition, the size of the ferrite core disposed in the first region A2 may be greater than the size of the ferrite core disposed in the third region A3.

Alternatively, the thickness of the ferrite core disposed in the second region A2 may be greater than the thickness of the ferrite core disposed in the first region A1, and the thickness of the ferrite core disposed in the second region A2 may be greater than the thickness of the ferrite core disposed in the third region A3.

Alternatively, the volume of the ferrite core disposed in the second region A2 may be greater than the volume of the ferrite core disposed in the first region A1, and the volume of the ferrite core disposed in the second region A2 may be greater than the volume of the ferrite core disposed in the third region A3.

On the other hand, the number of ferrite cores disposed in the first region A1 may be greater than the number of ferrite cores disposed in the second region A2. The number of ferrite cores disposed in the first region A1 may be greater than the number of ferrite cores disposed in the third region A3. The number of ferrite cores disposed in the second region A2 may be equal to the number of ferrite cores disposed in the third region A3.

Accordingly, since the second region A2 has a smaller cross-sectional size than the first region A1, the magnetic flux density is stronger, thereby obtaining the advantage of minimizing the problem of magnetic saturation occurring in the core.

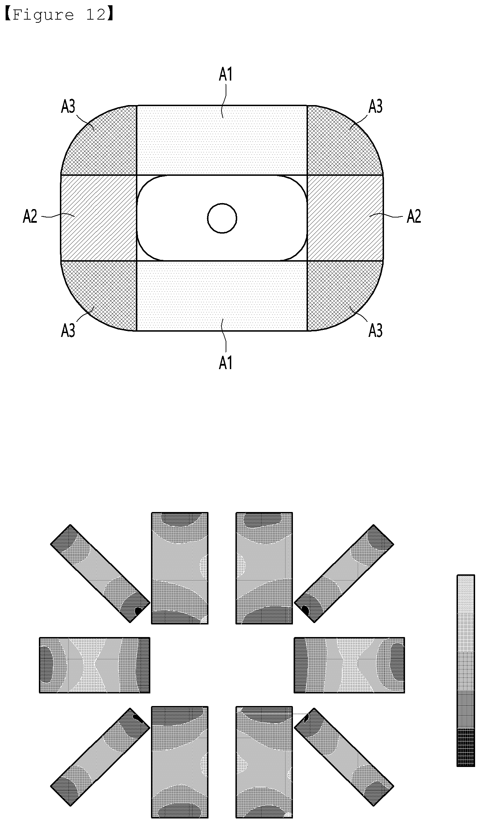

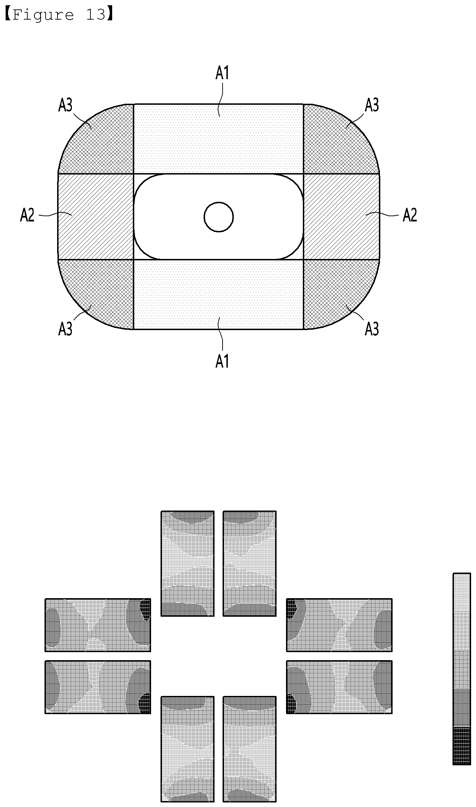

On the other hand, when the thickness of each ferrite core is reduced in the arrangement of FIG. 10, that is, the arrangement according to the first embodiment (for example, 5T->3T), the magnetic flux density imbalance of the ferrite core disposed in the first region A1 may become severe. Accordingly, it may be arranged as shown in the example of FIG. 12 or FIG. 13.

FIG. 12 is an exemplary view illustrating an arrangement structure of a ferrite core for a rectangular working coil according to a third embodiment of the present disclosure.

That is, ferrite cores having the same size may be disposed in the first and second regions A1 and A2, and ferrite cores having a smaller size than the first or second region A1 or A2 may be disposed in the third region A3. It is assumed that the thickness of the ferrite cores disposed in the first to third regions A1, A2, and A3 are the same. For example, the ferrite cores may each have a width of 35 mm, a height of 60 mm, and a thickness of 3T, but this is only an example and the present disclosure is not limited thereto.

On the other hand, the number of ferrite cores disposed in the first region A1 may be greater than the number of ferrite cores disposed in the second region A2. The number of ferrite cores disposed in the first region A1 may be greater than the number of ferrite cores disposed in the third region A3. The number of ferrite cores disposed in the second region A2 may be equal to the number of ferrite cores disposed in the third region A3.

This may be the balanced arrangement of the ferrite core considering the feature that the magnetic flux density is relatively strong in the horizontal or vertical direction and the magnetic flux density is weak in the diagonal direction.

FIG. 13 is an exemplary view illustrating an arrangement structure of a ferrite core for a rectangular working coil according to a fourth embodiment of the present disclosure.

That is, ferrite cores having the same size may be disposed in the first and second regions A1 and A2, and ferrite cores may not be disposed in the third region A3 (in some cases, the ferrite core disposed in the second region A2 may be disposed to partially occupy the third region A3).

It is assumed that the thicknesses of the ferrite cores disposed in the first and second regions A1 and A2 are the same. For example, the ferrite cores may each have a width of 35 mm, a height of 60 mm, and a thickness of 3T, but this is only an example and the present disclosure is not limited thereto.

On the other hand, the number of ferrite cores disposed in the first region A1 may be equal to the number of ferrite cores disposed in the second region A2.

This may be an arrangement structure that compensates for the magnetic flux on the vertical side, that is, in the second region A2, by removing ferrite from the diagonal portion where the magnetic flux is relatively weak.

According to the present disclosure described above, since the cooktop 10 may heat both the magnetic body and the non-magnetic body by providing only a single coil and capacitor without a separate switching structure, a switching switch or an additional circuit is not required, thereby reducing costs and volume. Since the number of turns of the working coil 12 is reduced, there is an advantage in that the manufacturing costs and weight of the working coil 12 are reduced and a separate inductor or switch and a separate capacitor for frequency band variation are unnecessary.

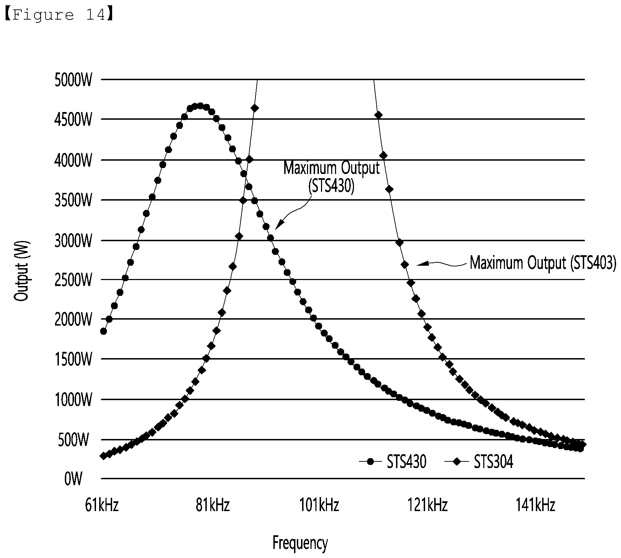

FIG. 14 is a view illustrating outputs for a magnetic body and a non-magnetic body in a cooktop according to an embodiment of the present disclosure.

As illustrated in FIG. 14, the cooktop 10 may operate at approximately 91 kHz when heating the magnetic container and may operate at approximately 121 kHz when heating the non-magnetic container. Therefore, the cooktop 10 may secure the desired minimum output for both the containers of the two materials.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present disclosure is to be considered illustrative, and not restrictive, and the technical spirit of the present disclosure is not limited to the foregoing embodiment.

Therefore, the scope of the present disclosure is defined not by the detailed description of the invention but by the appended claims, and all differences within the scope will be construed as being included in the present disclosure.

**Claims**

1. A induction heating type cooktop comprising:

   an upper plate glass having a heating region formed so as to heat a cooking container;
   a working coil configured to generate a magnetic field to heat the cooking container; and

an inverter having a switch driven to allow current to flow in the working coil,
wherein an area of the working coil is smaller than an area of the heating region.

2. The induction heating type cooktop of claim 1, wherein the area of the working coil is half of the area of the heating region.

3. The induction heating type cooktop of claim 1, wherein the working coil is arranged such that a distance between a first turn and a second turn adjacent to the first turn is spaced apart from each other by a preset interval.

4. The induction heating type cooktop of claim 3, wherein the preset interval is a thickness of the working coil.

5. The induction heating type cooktop of claim 1, wherein the switch is a SiC element.

6. The induction heating type cooktop of claim 1, wherein a number of turns of the working coil is determined by the area of the heating region and specifications of the working coil.

7. The induction heating type cooktop of claim 6, wherein the number of turns of the working coil is half of a value obtained by dividing a length corresponding to a difference between an inner diameter and an outer diameter of the working coil by a diameter of one turn of the working coil.

8. The induction heating type cooktop of claim 7, wherein the diameter of one turn of the working coil is determined by a diameter of a single strand of a copper wire constituting the working coil and a total number of strands,

the diameter of the single strand is smaller than a penetration length of an operating frequency, and
the total number of strands is determined according to an expected current value according to a power factor in a resonance circuit.

9. The induction heating type cooktop of claim 1, wherein the inverter operates in a frequency band of 50 kHz or higher.

【Figure 1】

【Figure 2】

【Figure 3】

【Figure 4】

【Figure 5】

| Coil Turn | $C_r$(uF) | Vessel | $f_{SW}$(kHz) | $i_{o,rms}$(A) | P(kW) | Temp.(℃)[3] |
|---|---|---|---|---|---|---|
| 16T | 0.32x2 | Clad | 35.4 | 31.5 | 3.4 | 48 |
| | | STS304 | 58.5 | 45.0 | 2.7 | 90 |
| 15T | 0.268x2 | Clad | 40.8 | 32.1 | 3.4 | 49 |
| | | STS304 | 65.2 | 46.6 | 2.4 | 92 |
| 15T | 0.233x2 | Clad | 46.9 | 32.9 | 3.4 | 49.5 |
| | | STS304 | 71.7 | 48.1 | 2.3 | 90 |
| 13T[1,2] | 0.2x2 | Clad | 55.5 | 33.7 | 3.4 | 50 |
| | | STS304 | 80.8 | 48.3 | 2.1 | 90 |
| 12T[2] | 0.168x2 | Clad | 74 | 33.6 | 3.4 | 49 |
| | | STS304 | 110.6 | 48.5 | 1.8 | 92 |
| 11T | 0.133x2 | Clad | 87.8 | 33.3 | 3.4 | 51 |
| | | STS304 | 128.2 | 45.8 | 1.5 | 90 |

【Figure 6】

Output (W)

14-16T Test Region

11-13T Test Region

Recommended Control Region

Output Deterioration due to input voltage fluctuation

Resonance Frequency
(slightly different for each turn)

Frequency (kHz)

【Figure 7】

(a)

(b)

【Figure 8】

Total Diameter

Diameter of Single Strand

【Figure 9】

Inner Diameter  Outer Diameter  Inner Diameter  Outer Diameter

Example of Rectangular Coil  Maximum Number of Turns  (Maximum Number of Turns)/2

【Figure 10】

【Figure 11】

【Figure 12】

【Figure 13】

【Figure 14】

## INTERNATIONAL SEARCH REPORT

| | International application No. |
| --- | --- |
| | **PCT/KR2021/009565** |

**A. CLASSIFICATION OF SUBJECT MATTER**

**H05B 6/12**(2006.01)i; **H05B 6/06**(2006.01)i; **H02M 7/44**(2006.01)i

According to International Patent Classification (IPC) or to both national classification and IPC

**B. FIELDS SEARCHED**

Minimum documentation searched (classification system followed by classification symbols)

H05B 6/12(2006.01); H05B 6/04(2006.01); H05B 6/06(2006.01); H05B 6/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유도가열(inductive heating), 쿡탑(cooktop), 코일(coil), 스위치(switch), 인버터 (inverter), 자기장(magnetic field), 면적(area)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2018-0069532 A (LG ELECTRONICS INC.) 25 June 2018 (2018-06-25) See paragraphs [0031]-[0066]; claim 6; and figures 2-3. | 1-2,5,9 |
| Y | | 3-4,6-8 |
| Y | JP 2018-097990 A (RCS K.K.) 21 June 2018 (2018-06-21) See claim 10. | 3-4,6-8 |
| A | KR 10-2020-0066529 A (WOORI TECH FUTURE CO., LTD.) 10 June 2020 (2020-06-10) See paragraphs [0015]-[0023]; and figures 2-3. | 1-9 |
| A | KR 10-2020-0073114 A (SAMSUNG ELECTRONICS CO., LTD.) 23 June 2020 (2020-06-23) See paragraphs [0040]-[0049]; and figures 2-4. | 1-9 |
| A | JP 5662344 B2 (PANASONIC CORPORATION) 28 January 2015 (2015-01-28) See claims 1-4; and figures 11-13. | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 March 2022** | **31 March 2022** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
| --- |
| **PCT/KR2021/009565** |

| Patent document cited in search report | | | Publication date (day/month/year) | Patent family member(s) | | | Publication date (day/month/year) |
| --- | --- | --- | --- | --- | --- | --- | --- |
| KR | 10-2018-0069532 | A | 25 June 2018 | EP | 3337294 | A1 | 20 June 2018 |
| | | | | EP | 3337294 | B1 | 24 July 2019 |
| | | | | EP | 3567986 | A1 | 13 November 2019 |
| | | | | EP | 3567986 | B1 | 19 August 2020 |
| | | | | US | 10917947 | B2 | 09 February 2021 |
| | | | | US | 2018-0177000 | A1 | 21 June 2018 |
| | | | | US | 2021-0127463 | A1 | 29 April 2021 |
| JP | 2018-097990 | A | 21 June 2018 | | None | | |
| KR | 10-2020-0066529 | A | 10 June 2020 | KR | 10-2161358 | B1 | 20 October 2020 |
| KR | 10-2020-0073114 | A | 23 June 2020 | EP | 3858107 | A1 | 04 August 2021 |
| | | | | EP | 3858107 | A4 | 24 November 2021 |
| | | | | JP | 2020-095865 | A | 18 June 2020 |
| JP | 5662344 | B2 | 28 January 2015 | CN | 102652460 | A | 29 August 2012 |
| | | | | CN | 102652460 | B | 09 July 2014 |
| | | | | EP | 2512205 | A1 | 17 October 2012 |
| | | | | EP | 2512205 | A4 | 02 April 2014 |
| | | | | EP | 2512205 | B1 | 11 February 2015 |
| | | | | JP | 2013-070785 | A1 | 22 April 2013 |
| | | | | US | 2012-0261405 | A1 | 18 October 2012 |
| | | | | WO | 2011-070785 | A1 | 16 June 2011 |

Form PCT/ISA/210 (patent family annex) (July 2019)